# EUROPEAN PATENT SPECIFICATION

(11) **EP 0 685 724 B1**
(45) Date of publication and mention of the grant of the patent: **21.07.1999**
(21) Application number: 94907072.6
(22) Date of filing: 18.02.1994
(51) Int. Cl.: G01M 17/06, G01B 5/255

(54) **CAR STABILITY MEASURING EQUIPMENT AND STABILITY REGULATION METHOD**
VORRICHTUNG ZUR MESSUNG UND VERFAHREN ZUR KRAFTFAHRZEUGSTABILITÄTSREGELUNG
EQUIPEMENT DE MESURE DE LA STABILITE D'UNE VOITURE ET PROCEDE DE REGLAGE DE CETTE STABILITE

(30) Priority: 18.02.1993 JP 2932493; 21.12.1993 JP 32284793
(43) Date of publication of application: 06.12.1995
(73) Proprietor: BRIDGESTONE CORPORATION, Tokyo 104-0031 (JP)
(72) Inventor: KAWABE, Hiroshi, Kodaira-shi, Tokyo 187 (JP); YAMAYA, Kenjiro, Kodaira-shi, Tokyo 187 (JP)
(74) Representative: Whalley, Kevin
(86) International application number: JP9400250
(87) International publication number: WO9419672

(56) References cited:
- EP-A- 0 292 855
- JP-A- 3 218 434

## Description

The present invention relates to an apparatus for measuring the stability of a vehicle and to a method of adjusting the stability thereof. More particularly, the present invention concerns an apparatus for measuring the stability of a vehicle which expresses states of the stability of a vehicle as well as a method of adjusting the stability of a vehicle by using the apparatus for measuring the stability of a vehicle.

Conventionally, an alignment tester for measuring the mounting angle (mounting attitude angle) of a vehicle wheel, including the static toe angle, the camber angle, and the caster angle, and a side slip tester for measuring the amount of side slip of the two front wheels of a vehicle during travelling, are known as vehicle-wheel inspecting apparatuses for inspecting the stability of vehicle-mounted wheels during travelling. In addition, an apparatus is also known in which vehicle-mounted wheels are rotated on rollers, lateral forces occurring in the tires at that time are measured, and the respective toe values when the rollers are rotated forwardly and reversely are measured in terms of the angle and are averaged so as to determine virtual toe values. Further, as disclosed in Japanese Patent Application Laid-Open No. 3-218434, an apparatus is also known in which the side walls of the left and right tires are fixed by being pressed from the outer side of the vehicle so that the vehicle does not move laterally on rollers, and a lateral force of the tire at that time is measured by a load cell.

The static toe angle and the camber angle provided for each wheel play important roles with respect to stability when the vehicle travels. In terms of the basic viewpoint of alignment (wheel alignment), the camber angle is an angle provided for each wheel for the purposes of, among others, providing the vehicle with a straightly advancing characteristic and reducing the steering force of the steering wheel by reducing the scrub radius of the tire when steering the steering wheel. The static toe angle is provided for the purpose of correcting the side slip of the tire due to the provision of the camber angle.

The above-described conventional alignment tester is generally used to measure the angles and dimensions of the wheels and adjust the respective angles to targeted values set by a vehicle manufacturer. The values set by the manufacturer are provided in detail for each vehicle type. Accordingly, there is a drawback to the alignment tester in that the set values must be referred to for each vehicle type when the actual adjustment of the alignment is carried out.

In addition, even if the alignment is accurately adjusted to the values for left and right wheels set by the manufacturer, the vehicle may not be made to travel straight ahead because the deterioration of bushes and dampers, the twisting of the vehicle body, and the setback of wheels (the difference in wheelbase between left and right sides) occur due to variations in production during the manufacture of the vehicle and change over time.

Further, in cases where the size of tires mounted on the vehicle has been changed, or the tires have been changed to those having different gripping force, even if the alignment is adjusted in a similar manner, the force produced in each tire can vary, possibly resulting in unstable behaviour of the vehicle. To correct the unstable behaviour, there is no other way than to make adjustment by trial and error while confirming the travelling state of the vehicle by varying the alignment by small degrees. Hence, a certain measure of experience and a large number of steps are required, so that under the present situation such an adjustment method is virtually not put to practical use.

As for the above-described conventional side slip tester, since it is basically capable of measuring only the slide slip of front wheels, the side slip tester is not very useful in determining whether the vehicle is capable of travelling straight ahead.

In the apparatus disclosed in Japanese Patent Application No. 3-218434 for rotating rollers to measure their forces, a measure is provided to clamp the side walls of the tires from both sides thereof to prevent the vehicle from moving on rotating rollers on which the four wheels of the vehicle are placed. However, since the lateral movement of the tires is constrained, it is difficult to accurately measure the forces acting on the ground-contacting surfaces of the tires. Additionally, with the conventional measuring apparatus, the forces cannot be measured accurately unless the speed of the rollers is made high. In the state in which the speed of the rollers is made high, it is difficult to adjust alignment while rotating the rollers, so that the alignment adjustment must be carried out after stopping the rotation of the rollers. In making such adjustment, it is difficult to make adjustment by a single adjustment as targeted, and an operation which involves the procedures of measurement with the rollers rotating, the stopping of the rollers, and the adjustment of the alignment must be repeated over and over again, so that there is a problem in that the number of operational steps becomes very large.

If the alignment adjustment is incorrect, it is a known fact that various drawbacks occur, including the deterioration of stability with respect to disturbances such as wandering performance and side wind stability performance, abnormal wear of tires, poor fuel consumption, and increased noise produced by the tires.

As described above, even if the alignment is adjusted by using the wheel inspecting apparatus in the present state, the travelling performance of the vehicle and various performances of the tires have not yet reached their full potential.

Attention is also drawn to EP-A-0292855, wherein a method and apparatus is disclosed for precision adjustment of the suspension of motor vehicles, in which the wheels and axles are suspended with adjustable radius rods. All four wheels of the vehicle are supported by pairs of rollers carried by rotatable bases. The bases supporting the front wheels of the vehicles are mounted for lateral movement. Both the front and the back wheels are supported laterally by means capable of registering the force required to counteract any tendency of the vehicle to creep sideways when the wheel-supporting rollers are driven. Adjustments are first made to correct for any tendency for the vehicle to drift laterally. Measurements are then made at spaced points on the vehicle to determine the angle between its actual longitudinal center line and the ideal. On the basis of these measurements, the wheel track of the vehicle is also centered with respect to the vehicle.

The present invention has been devised to overcome the above-described drawbacks, and its object is to provide an apparatus for measuring the stability of a vehicle and a method of adjusting the stability of a vehicle which make it possible to adjust the vehicle wheels in a simple manner and accurately to set optimum values which differ depending on the types of tires, without being affected by the distortion and deterioration due to variations in the manufacturing process of vehicles and changes over time, without reference to settings of alignment set by a vehicle manufacturer.

Another object of the present invention is to improve the accuracy of measurement by preventing the vehicle body from moving during adjustment of the stability of a vehicle.

The present invention in a first aspect provides apparatus for measuring the stability of a vehicle, comprising: a plurality of placing racks each including a roller device having a plurality of rollers, whose axes of rotation are set in parallel to each other and are oriented horizontally, at least one of the plurality of rollers being rotatively driven, and a sensor for detecting at least one of a force in a direction of the axis of rotation of each of the rollers and a force in a direction perpendicular to the axis of rotation of each of the rollers, which act on the roller device, the plurality of placing racks being arranged at positions corresponding to respective wheels of a vehicle subject to measurement such that the axis of rotation of each of the rollers become parallel to each other, and each of the plurality of placing racks being movable independently in the direction of the axis of rotation of each of the rollers and in the direction perpendicular to the axis of rotation of each of the rollers; a driving device for driving at least one of the plurality of rollers; and a display unit for displaying a detected value of the sensor.

The apparatus of the invention preferably further comprises locking means for allowing the plurality of placing racks to be movable in the direction of the axis of rotation of each of the rollers and in the direction perpendicular to the axis of rotation of each of the rollers, and for stopping the movement of the placing racks at predetermined positions by locking the placing racks.

In addition, the apparatus of the invention is preferably further provided with a guide device for causing a central point of wheel tread of the vehicle subject to measurement to be located on a center line between the placing racks disposed on left and right sides.

The invention in a second aspect provides a method of adjusting the stability of a vehicle by using the apparatus for measuring the stability of a vehicle according to the first aspect of the invention, comprising the steps of: placing wheels of a vehicle subject to adjustment onto a plurality of placing racks, respectively; driving at least one of drivable rollers of the placing racks on left and right sides on which rear wheels of the vehicle subject to adjustment are placed; detecting at least one of a force in a direction of an axis of rotation of each of the rollers and a force in a direction perpendicular to the axis of rotation of each of the rollers, which act on a roller device of each of the placing racks on the left and right sides on which front wheels of the vehicle subject to adjustment are placed; and adjusting an angle of attitude of the rear wheels such that a sum of the detected forces in the direction of the axis of rotation of each of the rollers or a difference between the detected forces in the direction perpendicular to the axis of rotation of each of the rollers becomes minimal.

The method of the invention of adjusting the stability of a vehicle may suitably comprise the steps of: setting a plurality of placing racks respectively at positions corresponding to wheels of a vehicle subject to adjustment; placing the wheels of the vehicle subject to adjustment onto the plurality of placing racks, respectively; driving at least one of drivable rollers of the placing racks on left and right sides on which rear wheels of the vehicle subject to adjustment are placed; detecting at least one of a force in a direction of an axis of rotation of each of the rollers and a force in a direction perpendicular to the axis of rotation of each of the rollers, which act on a roller device of each of the placing racks on the left and right sides on which front wheels of the vehicle subject to adjustment are placed; and adjusting an angle of attitude of the rear wheels such that a sum of the detected forces in the direction of the axis of rotation of each of the rollers or a difference between the detected forces in the direction perpendicular to the axis of rotation of each of the rollers becomes minimal.

In the step of placing the wheels of the vehicle in the method of the invention, it is preferable that locking means is locked after the wheels of the vehicle subject to adjustment are respectively placed on the plurality of placing racks in a state in which the locking means is unlocked.

It is further preferable that the method of the invention further comprises the step of: adjusting the angle of attitude of the rear wheels such that each of the forces in the direction of the axis of rotation of each of the rollers acting on the placing racks on the left and right sides on which the rear wheels are placed becomes minimal, by driving the at least one of drivable rollers of the placing racks on the left and right sides on which the rear wheels of the vehicle subject to adjustment are placed.

It is still further preferable that the method of the invention further comprises the step of: adjusting the angle of attitude of the front wheels such that each of the forces in the direction of the axis of rotation of each of the rollers acting on the placing racks on the left and right sides on which the front wheels are placed becomes minimal, by driving the at least one of rotatably drivable rollers of the placing racks on the left and right sides on which the front wheels of the vehicle subject to adjustment are placed.

The invention in a third aspect provides a method of adjusting the stability of a vehicle by using the apparatus for measuring the stability of a vehicle according to the first aspect of the invention, comprising the steps of: placing wheels of a vehicle subject to adjustment onto a plurality of placing racks, respectively; driving at least one of drivable rollers of one placing rack among the plurality of placing racks on which the respective wheels of the vehicle subject to adjustment are placed; detecting at least one of a force in a direction of an axis of rotation of each of the rollers and a force in a direction perpendicular to the axis of rotation of each of the rollers, which act on a roller device at least one of whose rollers has been driven; and adjusting an angle of attitude of the wheel on at least one of the rollers being driven such that at least one of the detected force in the direction of the axis of rotation of each of the rollers and the detected force in the direction perpendicular to the axis of rotation of each of the rollers becomes minimal.

In the apparatus according to the first aspect of the invention, a plurality of placing racks are provided. Each of these placing racks includes a roller device having a plurality of rollers, whose axes of rotation are set in parallel to each other and are oriented horizontally, at least one of the plurality of rollers being rotatively driven, and a sensor for detecting at least one of the force in the direction of the axis of rotation of each of the rollers and the force in a direction perpendicular to the axis of rotation of each of the rollers, which act on the roller device. These placing racks are arranged at positions corresponding to the respective wheels of the vehicle subject to measurement such that the axes of rotation of the rollers become parallel to each other. At least one of the plurality of rollers is rotatively driven by a driving device, and the detected value of the sensor is displayed on a display unit. These placing racks may be fixedly disposed at positions corresponding to the respective wheels of the vehicle subject to adjustment. However, if locking means is provided for allowing the placing racks to be movable in the direction of the axis of rotation of each roller and in the direction perpendicular to the axis of rotation of each roller and for stopping the movement of the placing racks at predetermined positions by locking the placing racks, it is possible to make positional adjustment in correspondence with a setback of the vehicle.

In accordance with the apparatus according to the first aspect of the invention, if the wheels of the vehicle subject to measurement are placed in such a manner as to be located on the respective placing racks, and at least one of the rotatably drivable rollers of the placing racks is driven, a force acts on each roller device in at least one of the direction of the axis of rotation of each roller and the direction perpendicular to the axis of rotation of each roller in correspondence with the stability of the vehicle. Accordingly, by detecting at least one of the force in the direction of the axis of rotation of each roller and the force in the direction perpendicular to the axis of rotation of each roller, it is possible to measure the stability of the vehicle in a simple manner and accurately.

To measure the stability with high accuracy by using this stability measuring apparatus, it is necessary to cause the central points of the wheel treads of the vehicle subject to measurement (the central point of the front tread and the central point of the rear tread) to be positioned on a center line between the placing racks on the left and right sides. If the guide device is used, the vehicle can be advanced easily in the direction perpendicular to the axis of rotation of each roller, and the central points of the wheel treads of the vehicle subject to measurement can be positioned on the center line between the placing racks on the left and right sides. In addition, after the vehicle has been advanced onto the placing racks, the central points of the wheel treads of the vehicle subject to measurement can be positioned on the center line between the placing racks on the left and right sides.

To adjust the stability of the vehicle by using the above-described stability measuring apparatus, the wheels of the vehicle subject to adjustment are respectively placed on the plurality of placing racks, and then at least one of the drivable rollers of the placing racks on the left and right sides on which the rear wheels of the vehicle subject to adjustment are placed are driven. In this state, detection is carried out with respect to at least one of the force in the direction of the axis of rotation of each roller and the force in the direction perpendicular to the axis of rotation of each roller, which act on the roller device of each of the placing racks on the left and right sides on which the front wheels of the vehicle subject to adjustment are placed. Then, the angle of attitude of the rear wheels is adjusted such that the sum of the detected forces in the direction of the axis of rotation of each roller or the difference between the detected forces in the direction perpendicular to the axis of rotation of each roller, i.e., the sum of forces acting on the ground-contacting surfaces of the tires of the front wheels, becomes minimal.

Although the front wheel alignment or the rear wheel alignment can be respectively adjusted independently, the stability of the wheel is affected by distortion and deterioration due to variations in the manufacturing process of vehicles and changes over time. Accordingly, if the angle of attitude of the rear wheels is adjusted such that the sum of the forces acting on the ground-contacting surfaces of the tires of the front wheels becomes minimal in the state in which the rear wheels are rotating, it is possible to make adjustment in a simple manner and accurately to optimum settings which differ depending on the types of tires, without being affected by the distortion and deterioration due to variations in the manufacturing process of vehicles and changes over time.

In the case where the stability of the vehicle is adjusted by using the preferred apparatus for measuring the stability of a vehicle, wherein locking means is provided, the plurality of placing racks are respectively set at positions corresponding to the wheels of the vehicle subject to adjustment, and steps similar to those described above are then carried out. The stability measuring apparatus used in this method is arranged such that the placing racks are movable, so that if the placing racks are set at positions corresponding to setback, it is possible to make adjustment of the stability of a vehicle in which a setback has occurred. In this case, the locking means may be locked after the wheels of the vehicle subject to adjustment are respectively placed on the plurality of placing racks with the locking means set in an unlocked state. Alternatively, the wheels of the vehicle subject to adjustment may be placed on the placing racks after the placing racks are respectively moved to positions corresponding to the wheels of the vehicle subject to adjustment, and are then positioned and locked by the locking means.

The angle of attitude of the rear wheels can be adjusted independently if at least one of the drivable rollers of the placing racks on the left and right sides on which the rear wheels of the vehicle subject to adjustment are placed is driven, and if the angle of attitude of the rear wheels is adjusted such that the respective forces in the direction of the axis of rotation of the roller acting on the placing racks on the left and right sides on which the rear wheels are placed become minimal.

Furthermore, the angle of attitude of the front wheels can be adjusted independently if at least one of the drivable rollers of the placing racks on the left and right sides on which the front wheels of the vehicle subject to adjustment are placed is driven, and if the angle of attitude of the front wheels is adjusted such that the respective forces in the direction of the axis of rotation of the roller acting on the placing racks on the left and right sides on which the front wheels are placed become minimal.

In the method according to the third aspect of the invention, when the stability of a vehicle is adjusted by using the stability measuring apparatus according to the first aspect of the invention, the wheels of the vehicle subject to adjustment are respectively placed onto the plurality of placing racks. At least one of the drivable rollers of one placing rack among the plurality of placing racks, on which the respective wheels of the vehicle subject to adjustment are placed, is driven. In this state, at least one of the force in the direction of the axis of rotation of each roller and the force in the direction perpendicular to the axis of rotation of each roller, which act on a roller device whose roller has been driven, is detected. The angle of attitude of the wheel on the roller being driven is adjusted such that at least one of the detected force in the direction of the axis of rotation of each roller and the detected force in the direction perpendicular to the axis of rotation of each roller becomes minimal. Then, the above-described stability adjustment is carried out for each wheel to adjust the stability for all the wheels.

It should be noted that, in the method according to the third aspect of the invention, when the stability of a vehicle is adjusted by using the preferred stability measuring apparatus, wherein locking means is provided, there is provided the step of setting the plurality of placing racks respectively at positions corresponding to the wheels of the vehicle subject to adjustment, prior to placing the vehicle onto the placing racks.

As described above, in accordance with the apparatus according to the first aspect of the invention, it is possible to obtain an advantage in that the stability of the vehicle can be measured in a simple manner and accurately by detecting at least one of the force in the direction of the axis of rotation of the roller and the force in the direction perpendicular to the axis of rotation of the roller, which act on each roller device.

In accordance with the preferred apparatus according to the invention, wherein locking means is provided, it is possible to obtain an advantage in that the stability of a vehicle in which a setback has occurred can be measured in a simple manner and accurately by positioning the placing racks at positions corresponding to the setback.

In accordance with the further preferred apparatus according to the invention, wherein a guide device is provided, it is possible to obtain an advantage in that the stability of the vehicle can be measured with high accuracy since the guide device is provided to allow the vehicle to be advanced straight ahead with respect to the measuring apparatus.

In accordance with preferred features of the invention, it is also possible to obtain an advantage in that it is possible to adjust the vehicle wheels in a simple manner and accurately to set optimum values which differ depending on the types of tires without being affected by the distortion and deterioration due to variations in the manufacturing process of vehicles and changes over time, without reference to settings of alignment set by a vehicle manufacturer.

In accordance with the method according to the third aspect of the invention, since the wheels are separately rotated one at a time, and the other three wheels are stopped, it is possible to obtain an advantage in that it is possible to prevent the the vehicle being adjusted from moving on the apparatus, thereby making it possible to adjust the stability with high accuracy.

The invention will be further described, by way of example only, with reference to the accompanying drawings, in which:
Fig. 1 is a schematic diagram of a first embodiment of an apparatus for measuring stability in accordance with the present invention;
Fig. 2 is a plan view of a guide device;
Fig. 3 is a front view of the guide device;
Fig. 4 is a plan view of placing racks;
Fig. 5 is a front view of the placing racks;
Fig. 6 is a side view of the placing racks;
Fig. 7 is a schematic diagram of a second embodiment of the apparatus for measuring stability in accordance with the present invention;
Fig. 8 is a schematic diagram of a third embodiment of the apparatus for measuring stability in accordance with the present invention;
Figs. 9A, 9B, and 9C are a plan view of the placing rack shown in Fig. 8, a front view of the placing rack shown in Fig. 8, and a side view of the placing rack shown in Fig. 8, respectively;
Fig. 10 is a schematic plan view of a fourth embodiment of the apparatus for measuring stability in accordance with the present invention; and
Fig. 11 is a schematic end view of the fourth embodiment.

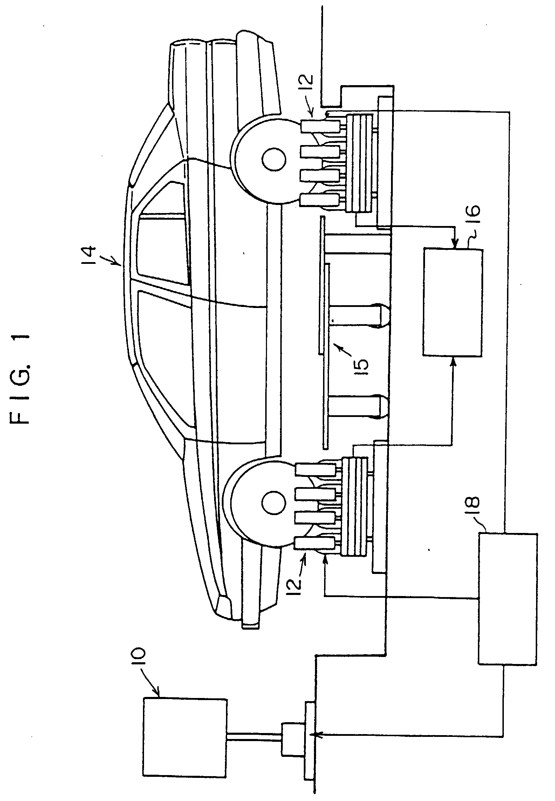

Referring now to the drawings, a detailed description will be given of a first embodiment of the present invention. Fig. 1 shows a vehicle-stability measuring apparatus which is of an embedded type. This stability measuring apparatus is provided with placing racks 12 each including a roller device having a plurality of rollers, whose axes of rotation are arranged in parallel to each other and are oriented horizontally, as well as a sensor for measuring forces acting on the roller device. The sensor provided on the placing rack 12 is connected to a display unit 16 for displaying a detected value of the sensor. A motor is coupled to one of the rollers provided on the placing rack 12, and the motor is connected to a controller 18 for controlling the rotative driving of the motor. Reference numeral 15 denotes an extensible connecting footplate.

A guide device 10 for allowing a vehicle 14 subject to measurement to advance straight ahead in a direction perpendicular to the axis of rotation of each roller on the placing rack 12 is disposed forwardly of the stability measuring apparatus in the direction in which the vehicle 14 advances. This guide device 10 is provided with a motor for moving a target plate of the guide device to the left and the right, and this motor is connected to the controller 18.

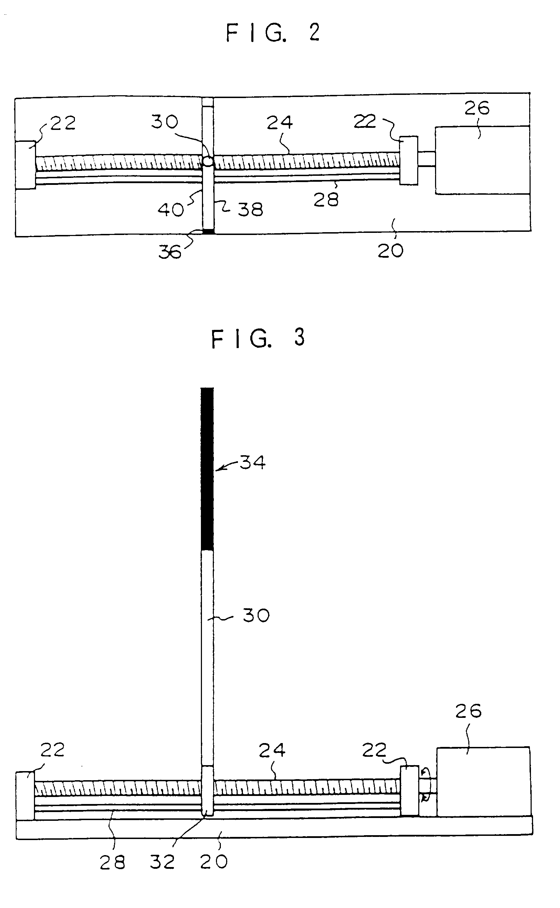

As shown in Figs. 2 and 3, the guide device 10 has a base plate 20. A pair of blocks 22 are fixed to the base plate 20 in such a manner as to be parallel to each other. A screw 24 is rotatably supported by and between the blocks 22. A guide rod 28 is fixed to and between the blocks 22 in parallel to the screw 24. A moving block 32, in which a through hole for the passage of the guide rod 28 therethrough and a screw hole having an internal thread for threaded engagement of the screw 24 are formed, is provided. The guide rod 28 is passed through the through hole in the moving block 32, and the screw 24 is threadedly engaged in the screw hole. Additionally, a motor 26 is fixed to the base plate 20, and an output shaft of the motor 26 is coupled to one end of the screw 24. One end of a column 30 extending in a direction perpendicular to the base plate 20 is secured to the moving block 32. A target plate 34 accommodating a lamp therein is secured to the other end of the column 30.

The side surface of the target plate 34 which is on the vehicle 14 side is formed by a black opaque plate 36. Meanwhile, the side surface of the target plate 34 which is on the motor 26 side is formed by a red plate 38 which transmits red light therethrough, while the surface of the target plate 34 facing the red plate 38 is formed by a green plate 40 which transmits green light therethrough. The light which is transmitted through the target plate 34 may be the light of other colours.

In this guide device 10, since the moving block 32 is moved to the left and the right along the screw 24 as the motor 26 is rotated forwardly or reversely, the target plate 34 is moved in the leftward or rightward direction. After the guide device 10 is installed in the state shown in Fig. 1, and if the target plate 34 is viewed from the vehicle 14 side, only the opaque plate 36 can be viewed, as shown in Fig. 3, when the target plate 34 is located immediately in front of the driver. Meanwhile, when the target plate 34 is offset toward the left from the straight-ahead position, the red plate 38 can be viewed, and when the target plate 34 is offset toward the right, the green plate 40 can be viewed. Accordingly, if the vehicle is advanced onto this measuring apparatus in the state in which only the opaque plate 36 is viewed by moving the target plate 34 in the leftward or rightward direction, it is possible to allow the vehicle 14 to advance straight ahead and to allow the central point of each wheel tread of the vehicle to be located on the center line between the placing racks on both sides. Consequently, since the error in the thrust angle of the vehicle can be eliminated, this arrangement is effective in enhancing reproducibility in measurement.

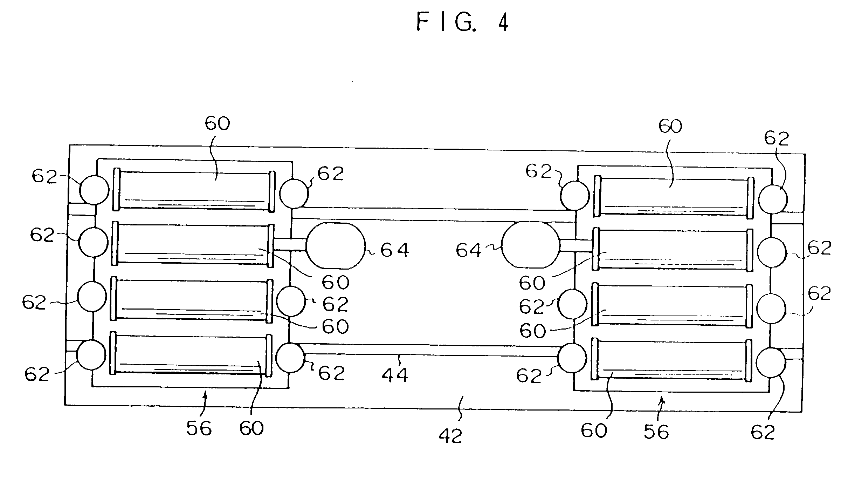

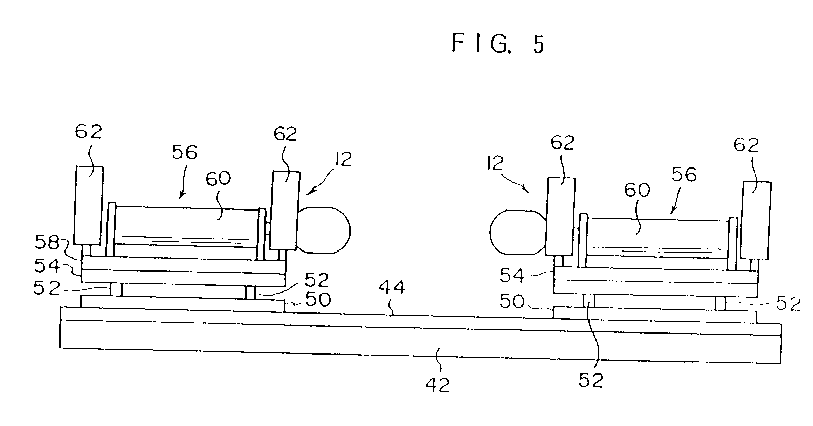

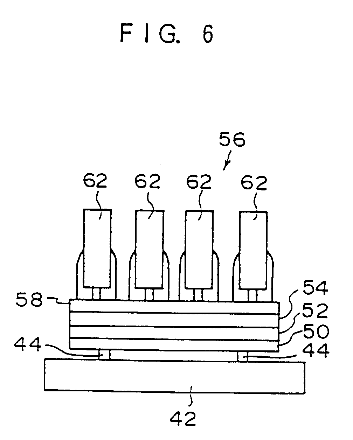

The four placing racks shown in Fig. 1 are respectively arranged in the same way, so that a description will be given of only one placing rack. As shown in Figs. 4, 5 and 6, the placing rack 12 is movably attached to a rectangular base plate 42. A pair of guide rails 44 for leftward and rightward sliding, which are arranged in parallel and extend in a direction parallel to the long side of the base plate 42, i.e., in the leftward and rightward directions, are fixed to the base plate 42. The left placing rack 12 and the right placing rack 12 are mounted on the guide rails 44 for leftward and rightward sliding in such a manner as to be movable along the guide rails 44 for leftward and rightward sliding. Since the left placing rack 12 and the right placing rack 12 are arranged laterally symmetrically, identical portions will be denoted by the same reference numerals, and a description will be given of only one placing rack.

A leftward and rightward moving base 50, which is movable only in the direction along the guide rails 44 for leftward and rightward sliding, is mounted on the guide rails 44 for leftward and rightward sliding. Guide rails 52 for fore and aft sliding, which are arranged in parallel and extend in a direction perpendicular to the guide rails 44 for leftward and rightward sliding, i.e., in the fore-and-aft direction, are secured to the leftward and rightward moving base 50. A sensor 54, which is movable only in a direction along the guide rails 52 for fore and aft sliding, is attached to the guide rails 52 for fore and aft sliding. This sensor 54 is provided with an element for detecting the force acting in the direction along the guide rails 44 for leftward and rightward sliding, as well as an element for detecting the force acting in the direction along the guide rails 52 for fore and aft sliding. These elements of the sensor 54 can be constituted by load cells or the like. Further, an element for measuring the force acting in the vertical direction may be provided on the sensor 54 so as to measure the weight of the vehicle.

A roller device 56 is fixed to the sensor 54. The roller device 56 has a roller base 58 secured to the sensor 54. Four vertical rollers 62 are rotatably provided uprightly on the roller base 58 along its side edge which is parallel to the guide rails 52 for fore and aft sliding. Also, three vertical rollers 62 are rotatably provided uprightly on a side edge which is parallel to that side edge. These vertical rollers 62 are for prevention of the wheel from falling out, and may be omitted.

Four horizontal rollers 60 having their axes of rotation set parallel and oriented horizontally are supported between the opposing sets of vertical rollers 62 in such a manner as to be rotatable between bearings fixed to the roller base 58. An output shaft of a motor 64 is coupled to a rotating shaft of one horizontal roller 60. This motor 64 is connected to the controller 18 shown in Fig. 1. The surface of each of these horizontal rollers 60 is provided with knurling, or a resin having an uneven surface is attached to the surface thereof, so that its coefficient of friction matches the coefficient of friction of the travelling road surface. Since road surfaces having various coefficients of friction exist in various countries of the world, it is desirable to effect measurement by using horizontal rollers having a coefficient of friction which matches the coefficient of friction of the road surface where the vehicle to be measured travels.

Although not shown, provided on each of the above-described placing racks are a locking means for fixing the leftward and rightward moving base 50 at a predetermined position on the guide rails 44 for leftward and rightward sliding and a locking means for fixing the sensor 54 at a predetermined position on the guide rails 52 for fore and aft sliding.

The placing rack 12 is movable in the leftward and rightward directions along the guide rails 44 for leftward and rightward sliding, and is movable in the fore-and-aft direction along the guide rails 52 for fore and aft sliding. In addition, the placing rack 12 can be fixed at a predetermined position by being locked by the locking means. It should be noted that although in the above description an example is given in which two placing racks 12 are mounted on a single base plate 42, a single placing rack 12 may be mounted on a single base plate 42, or four placing racks 12 may be mounted on a single base plate 42.

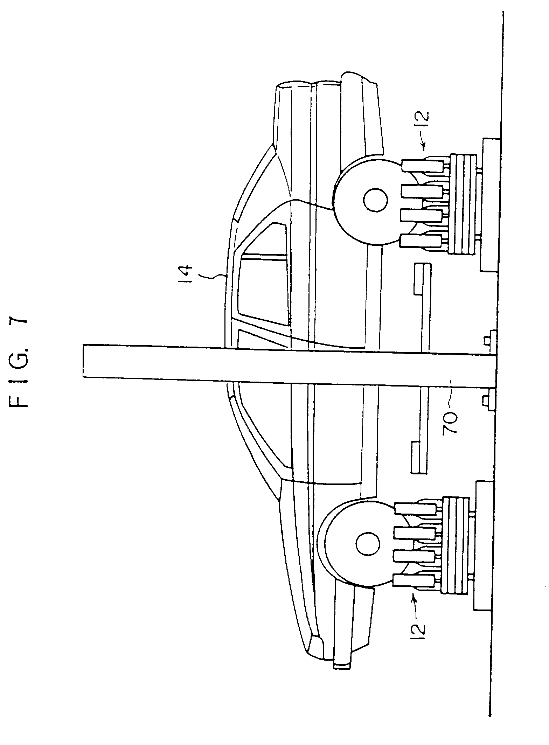

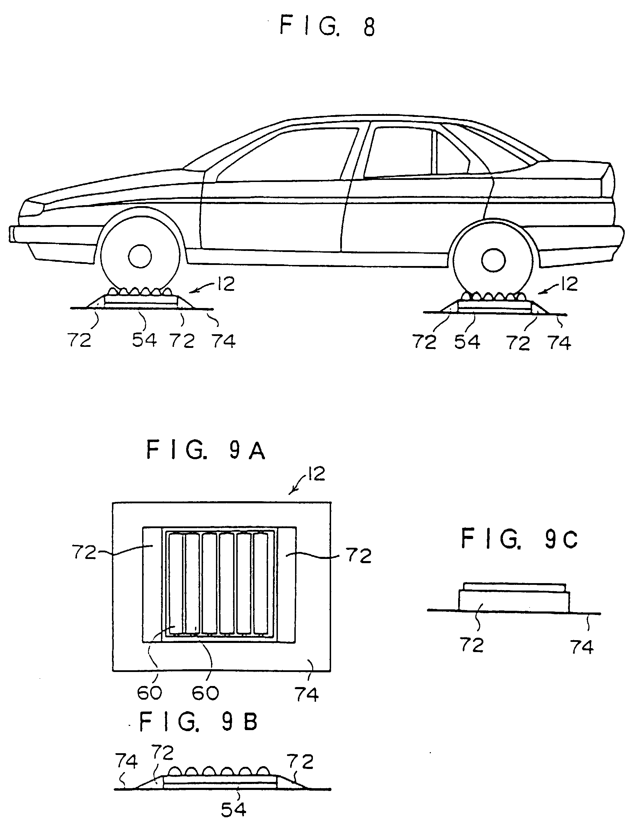

Fig. 7 shows a second embodiment of the stability measuring apparatus, and illustrates an example in which the vehicle 14 is mounted on the placing racks 12 by means of a lift 70. Figs. 8, 9A, 9B, and 9C show a third embodiment in which a correcting device (not shown) is provided to make the respective rollers parallel, and the stability measuring apparatus is made a portable type and is placed on the floor. In this case, an inclined surface 72 is attached to front and rear portions of each placing rack 12 to facilitate the riding of the vehicle onto the placing racks 12. In addition, it is preferable to lay a rubber sheet 74 underneath each placing rack so that the vehicle does not slip when riding onto the placing racks. The (unillustrated) correcting device is provided with a means for arranging the rollers in parallel, by stretching a string between the sets of rollers and measuring the angle of the rollers or by measuring the angle of the rollers by using an optical collimator as in the case of an alignment tester.

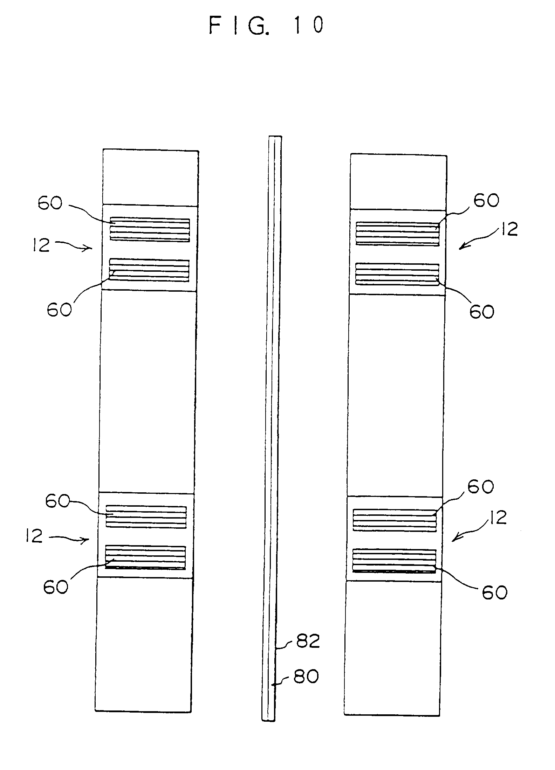

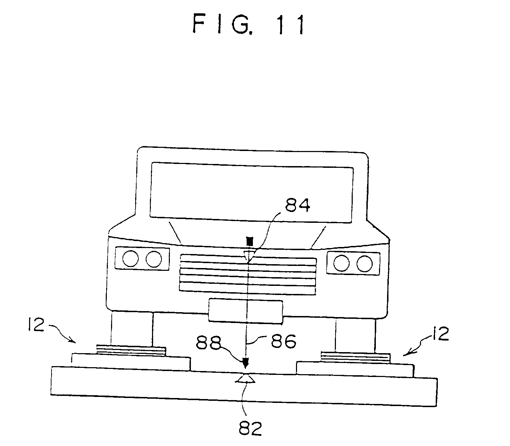

Fig. 10 shows a fourth embodiment of the stability measuring apparatus. In the drawing, portions corresponding to those described above will be denoted by the same reference numerals, and the description thereof will be omitted. In this embodiment, a guide bar 82 having a reference line 80, which extends in a direction perpendicular to the axis of rotation of each roller and is aligned with a center line between the left and right placing racks, is provided as a guide device for causing a central point of the wheel tread of the vehicle to be positioned on a central point between the left and right placing racks. Since the reference line is aligned with the center line, the left and right placing racks 12 are symmetrical about the reference line. In addition, as shown in Fig. 11, a mark 84 is provided at each of front and rear ends of the longitudinally extending center line of the vehicle, and a weight 88 is suspended by a string 86 in such a manner as to pass through the mark 84.

According to this guide device, if the locking means for the direction perpendicular to the axis of rotation of each roller on the placing rack is locked, and the locking means for the direction of the axis of rotation of each roller on the placing rack, i.e., for the direction of the wheel tread of the vehicle, is unlocked, and if the vehicle is moved so that the weight 88 is located immediately above the reference line 80, the central point of the wheel tread of the vehicle can be located on the center line between the left and right placing racks. In addition, if the vehicle is made to advance so that the weight 88 passes along and immediately above the reference line 80, the vehicle can be made to advance straight ahead in the direction perpendicular to the axis of rotation of each roller on each placing rack.

Next, a description will be given of a first method for adjusting stability by using the above-described stability measuring apparatus. This method is carried out by the following procedures (1) to (9).
(1) First, the locking means are unlocked, and the four placing racks 12 are set at positions corresponding to the respective wheels of the vehicle 14.
(2) After the position of the target plate 34 is adjusted so that only the target plate 34 of the guide device 10 can be viewed by the driver, the vehicle 14 is advanced straight ahead with respect to the stability measuring apparatus. As a result, the central point of the wheel tread of the vehicle subject to measurement can be positioned on the center line between the left and right placing racks.
   In addition, in a case where the stability measuring apparatus provided with the guide bar 82 is used, after each wheel of the vehicle is placed on each placing rack, the locking means for the direction perpendicular to the axis of rotation of each roller on the placing rack is locked, and the locking means for the direction of the axis of rotation of each roller on the placing rack is unlocked. Then, the vehicle is moved such that the weight 88 is located immediately above the reference line 80, thereby making adjustment such that the central points of the wheel treads for the front and rear wheels of the vehicle are located above the reference line.
(3) In the state in which the wheels of the vehicle 14 are placed on the respective placing racks 12, the locking means are locked. After the placing racks are locked at positions corresponding to the wheels of the vehicle 14, the vehicle 14 may be advanced. Meanwhile, in the case of the stability measuring apparatus in which the placing racks 12 are fixedly arranged, it is unnecessary to set the placing racks 12, and it suffices if the vehicle 14 is advanced straight ahead with respect to the stability measuring apparatus.
(4) Next, as the motors 64 on the left and right placing racks 12 where the rear wheels of the vehicle 14 are placed are driven, the horizontal rollers 60 are rotatively driven at a predetermined rotational speed (e.g., a rotational speed corresponding to a speed of 10 m/min of the vehicle).
(5) Next, measurements are made of the forces acting on the respective four placing racks 12, including the force in the direction along the guide rails 44 for leftward and rightward sliding, i.e., the force in the direction of the axis of rotation of each roller, and the force in the direction along the guide rails 52 for fore and aft sliding, i.e., the force in the direction perpendicular to the axis of rotation of each roller. The measured values of the forces in the direction of the axis of rotation of each roller are read from the display unit 16, so as to confirm whether each of the forces in the direction of the axis of rotation of each roller is minimal.
(6) In the event that each of the forces in the direction of the axis of rotation of each roller acting on the left and right placing racks 12 where the rear wheels are placed is not minimal, the angle of attitude of each rear wheel is adjusted such that each of the forces in the state in which the rollers are rotating becomes minimal. The adjustment of the angle of attitude of each rear wheel is not required if each of these forces is minimal.
(7) Next, in the state in which the horizontal rollers 60 on the left and right placing racks 12 where the rear wheels are placed are being rotated at a predetermined rotational speed, the angle of attitude of each rear wheel is adjusted such that the sum of the forces in the direction of the axis of rotation of each roller acting on the left and right roller devices where the front wheels of the vehicle 14 are placed becomes minimal, or such that the difference between forces in the direction perpendicular to the axis of rotation of each roller acting on the left and right roller devices 56 where the front wheels are placed becomes minimal, or such that the difference between the sum of the forces in the direction of the axis of rotation of each roller and the force in the direction perpendicular to the axis of rotation of each roller becomes minimal.
(8) Next, the rotation of the rollers of the roller devices 56 where the rear wheels are placed is stopped, and the rollers of the roller devices 56 where the front wheels are placed are rotated at the aforementioned predetermined speed.
(9) Then, in the state in which the rollers are rotating, the angle of attitude of each front wheel is adjusted such that each of the forces in the direction of the axis of rotation of each roller acting on the left and right placing racks where the front wheels are placed becomes minimal.

By performing the adjustment of the wheel alignment of the vehicle by the above-described procedures, it is possible to make adjustment of the vehicle and the tires in an optimum state. That is, when the vehicle is travelling, an unnecessary force ceases to act between the road surface and the wheels (tires). Adjustment may be carried out only with respect to the procedure (6), (7) or (9).

In accordance with the above-described first method, since the rollers of either two of the placing racks on which the front wheels or the rear wheels are placed among the four placing racks are driven simultaneously, when the forces occurring in the tires have become large, there is a possibility that the vehicle may move relative to the rollers. In such a case, an apparent thrust angle may occur to the vehicle being measured, so that a measurement error may become large. For this reason, in a second method which will be described below, this problem is overcome by rotating the wheels one at a time.

In this method, since its procedures (1) to (3) are similar to those of the above-described first method, a description will be given only of its subsequent procedures.
(4)' In a state in which the wheels of the vehicle are placed on the placing racks such that the central points of the front wheel tread and the rear wheel tread are located at the center line between the left and right placing racks, the locking means for the direction of the axis of rotation of each roller on the placing rack, i.e., for the direction of the wheel tread of the vehicle, is locked, and the horizontal rollers 60 for the right rear wheel are rotatively driven at a predetermined rotational speed (e.g., a rotational speed corresponding to a speed of 10 m/min of the vehicle).
(5)' Next, measurements are made of the forces acting on the placing rack 12 where the right rear wheel is placed, including the force in the direction along the guide rails 44 for leftward and rightward sliding, i.e., the force in the direction of the axis of rotation of each roller, and the force in the direction along the guide rails 52 for fore and aft sliding, i.e., the force in the direction perpendicular to the axis of rotation of each roller. The measured values of the force in the direction of the axis of rotation of each roller and the force in the direction perpendicular to the axis of rotation of each roller are read from the display unit 16, so as to confirm whether each of the force in the direction of the axis of rotation of each roller and the force in the direction perpendicular to the axis of rotation of each roller is minimal.
(6)' In the event that each of the forces acting on the placing rack 12 where the right rear wheel is placed, including the force in the direction of the axis of rotation of each roller and the force in the direction perpendicular to the axis of rotation of each roller, is not minimal, the angle of attitude of the right rear wheel is adjusted such that each of the forces in the state in which the rollers are rotating becomes minimal. The adjustment of the angle of attitude of the right rear wheel is not required if each of these forces is minimal.
(7)' Next, the above-described steps (4)' to (6)' are executed in the order of the left rear wheel, the right front wheel, and the left front wheel, and the angle of attitude is adjusted for all the four wheels as in the above-described manner.

It should be noted that if the above-described procedures are repeated a plurality of times, the accuracy of adjustment of the angle of posture improves further. In addition, although, in the above-described example, a description has been given of the example in which adjustment is made in the order of the right rear wheel, the left rear wheel, the right front wheel, and the left front wheel, the order may be any order.

Furthermore, although, in the above, a description has been given of the example in which adjustment is made such that each of the force in the direction of the axis of rotation of each roller and the force in the direction perpendicular to the axis of rotation of each roller becomes minimal, adjustment may be made such that the force in the direction of the axis of rotation of each roller becomes minimal, or adjustment may be made such that each of the forces in the direction perpendicular to the axis of rotation of each roller becomes minimal.

As the stability of the vehicle is adjusted in the above-described manner, it is possible to adjust the vehicle wheels in a simple manner and accurately to set optimum values which differ depending on the types of tires without being affected by the distortion and deterioration due to variations in the manufacturing process of vehicles and changes over time, without reference to settings of alignment set by the manufacturer. In consequence, it is possible to improve the stability of the vehicle, the riding comfort, and fuel consumption, prevent abnormal wear of tires, and reduce pattern noise of tires. Furthermore, since the apparatus itself can be made small, the stability measuring apparatus can be used in general tire shops and the like in the same way as a conventional alignment tester, at a cost lower than that of the conventional roller-type stability measuring apparatus, irrespective of installation sites and safely.

As described above, the apparatus for measuring the stability of a vehicle in accordance with the present invention is useful, for example, in simply and accurately measuring the stability of vehicles such as passenger cars and trucks, and the method of adjusting the stability of a vehicle is suitable, for example, in adjusting vehicle wheels simply and accurately by using the aforementioned stability measuring apparatus.

## Claims

1. Apparatus for measuring the stability of a vehicle (14), comprising:
a plurality of placing racks (12) each including a roller device (56) having a plurality of rollers (60), whose axes of rotation are set in parallel to each other and are oriented horizontally, at least one of said plurality of rollers (60) being rotatively driven, and a sensor (54) for detecting at least one of a force in a direction of the axis of rotation of each of said rollers (60) and a force in a direction perpendicular to the axis of rotation of each of said rollers (60), which act on said roller device (56), said plurality of placing racks (12) being arranged at positions corresponding to respective wheels of the vehicle (14) subject to measurement such that the axis of rotation of each of said rollers (60) become parallel to each other, and each of said plurality of placing racks (12) being movable independently in the direction of the axis of rotation of each of said rollers (60) and in the direction perpendicular to the axis of rotation of each of said rollers (60);
a driving device (64) for driving at least one of said plurality of rollers (60); and
a display unit (16) for displaying a detected value of said sensor (54).

2. Apparatus as claimed in claim 1, characterized by further comprising: locking means for allowing said plurality of placing racks (12) to be movable in the direction of the axis of rotation of each of said rollers (60) and in the direction perpendicular to the axis of rotation of each of said rollers, and for stopping the movement of said placing racks (12) at predetermined positions by locking said placing racks.

3. Apparatus as claimed in claim 1 or 2, characterized by further comprising: a guide device (10) for causing a central point of wheel tread of said vehicle (14) subject to measurement to be located on a center line between said placing racks (12) disposed on left and right sides.

4. A method of adjusting the stability of a vehicle (14) by using the apparatus for measuring the stability of a vehicle according to claim 1, comprising the steps of:
placing wheels of the vehicle (14) subject to adjustment onto a plurality of placing racks (12), respectively;
driving at least one of drivable rollers (60) of said placing racks (12) on left and right sides of which rear wheels of said vehicle subject to adjustment are placed;
detecting at least one of a force in a direction of an axis of rotation of each of said rollers (60) and a force in a direction perpendicular to the axis of rotation of each of said rollers, which act on a roller device (56) of each of said placing racks (12) on the left and right sides on which front wheels of said vehicle (14) subject to adjustment are placed; and
adjusting an angle of attitude of the rear wheels such that a sum of the detected forces in the direction of the axis of rotation of each of said rollers (60) or a difference between the detected forces in the direction perpendicular to the axis of rotation of each of said rollers becomes minimal.

5. A method of adjusting the stability of a vehicle (14) by using the apparatus for measuring the stability of a vehicle according to claim 2, comprising the steps of:
setting a plurality of placing racks (12) respectively at positions corresponding to wheels of the vehicle (14) subject to adjustment;
placing the wheels of said vehicle (14) subject to adjustment onto said plurality of placing racks (12), respectively;
driving at least one of drivable rollers (60) of said placing racks (12) on left and right sides on which rear wheels of said vehicle (14) subject to adjustment are placed;
detecting at least one of a force in a direction of an axis of rotation of each of said rollers (60) and a force in a direction perpendicular to the axis of rotation of each of said rollers, which act on a roller device (56) of each of said placing racks (12) on the left and right sides on which front wheels of said vehicle (14) subject to adjustment are placed; and
adjusting an angle of attitude of the rear wheels such that a sum of the detected forces in the direction of the axis of rotation of each of said rollers (60) or a difference between the detected forces in the direction perpendicular to the axis of rotation of each of said rollers becomes minimal.

6. A method as claimed in claim 5, characterized in that, in the step of placing the wheels of said vehicle (14), locking means is locked after the wheels of said vehicle subject to adjustment are respectively placed on said plurality of placing racks (12) in a state in which said locking means is unlocked.

7. A method as claimed in any of claims 4 to 6, characterized by further comprising the step of: adjusting the angle of attitude of the rear wheels such that each of the forces in the direction of the axis of rotation of each of said rollers (60) acting on said placing racks (12) on the left and right sides on which the rear wheels are placed becomes minimal, by driving said at least one of drivable rollers of said placing racks on the left and right sides on which the rear wheels of said vehicle (14) subject to adjustment are placed.

8. A method as claimed in any of claims 4 to 7, characterized by further comprising the step of: adjusting the angle of attitude of the front wheels such that each of the forces in the direction of the axis of rotation of each of said rollers (60) acting on said placing racks (12) on the left and right sides on which the front wheels are placed becomes minimal, by driving said at least one of drivable rollers of said placing racks (12) on the left and right sides on which the front wheels of said vehicle subject to adjustment are placed.

9. A method of adjusting the stability of a vehicle (14) by using the apparatus for measuring up the stability of a vehicle according to claim 1, comprising the steps of:
placing wheels of the vehicle (14) subject to adjustment onto a plurality of placing racks (12), respectively;
driving at least one of drivable rollers (60) of one placing rack (12) among said plurality of placing racks on which the respective wheels of said vehicle (14) subject to adjustment are placed;
detecting at least one of a force in a direction of an axis of rotation of each of said rollers (60) and a force in a direction perpendicular to the axis of rotation of each of said rollers, which act on a roller device (56) at least one of whose rollers has been driven; and
adjusting an angle of attitude of the wheel on at least one of said rollers (60) being driven such that at least one of the detected force in the direction of the axis of rotation of each of said rollers and the detected force in the direction perpendicular to the axis of rotation of each of said rollers becomes minimal.

10. A method of adjusting the stability of a vehicle (14) by using the apparatus for measuring the stability of a vehicle according to claim 2, comprising the steps of:
setting a plurality of placing racks (12) respectively at positions corresponding to wheels of the vehicle (14) subject to adjustment;
placing the wheels of said vehicle (14) subject to adjustment onto said plurality of placing racks (12), respectively;
driving at least one of drivable rollers (60) of one placing rack (12) among said plurality of placing racks on which the respective wheels of said vehicle (14) subject to adjustment are placed;
detecting at least one of a force in a direction of an axis of rotation of each of said rollers (60) and a force in a direction perpendicular to the axis of rotation of each of said rollers, which act on a roller device (56) at least one of whose rollers has been driven; and
adjusting an angle of attitude of the wheel on at least one of said rollers (60) being driven such that at least one of the detected force in the direction of the axis of rotation of each of said rollers and the detected force in the direction perpendicular to the axis of rotation of each of said rollers becomes minimal.

## Patentansprüche

1. Vorrichtung zum Messen der Stabilität eines Fahrzeugs (14), umfassend:
eine Vielzahl von Aufsatzgestellen (12), von denen jedes eine Walzeneinrichtung (56) mit einer Vielzahl von Walzen (60), deren Drehachsen parallel zueinander eingestellt und horizontal ausgerichtet sind, wobei zumindest eine der Vielzahl von Walzen drehangetrieben ist, und einen Sensor (54) zum Erfassen einer auf die Walzeneinrichtung (56) in eine Richtung der Drehachse jeder der Walzen (60) wirkenden Kraft und/oder einer auf die Walzeneinrichtung (56) rechtwinklig zu der Drehachse jeder der Walzen (60) wirkenden Kraft umfaßt, wobei die Vielzahl von Aufsatzgestellen (12) derart bei jeweiligen Rädern des der Messung unterworfenen Fahrzeugs (14) entsprechenden Positionen angeordnet ist, daß die Drehachsen jeder der Walzen (60) parallel zueinander werden, und jedes der Vielzahl von Aufsatzgestellen (12) in der Richtung der Drehachse jeder der Walzen (60) und in der Richtung rechtwinklig zu der Drehachse jeder der Walzen (60) unabhängig bewegbar ist;
eine Antriebsvorrichtung (64) zum Antreiben zumindest einer der Vielzahl von Walzen (60); und
eine Anzeigeeinheit (16) zum Anzeigen eines erfaßten Wertes des Sensors (54).

2. Vorrichtung nach Anspruch 1, dadurch gekennzeichnet, daß sie weiterhin umfaßt: eine Verriegelungseinrichtung, um zu ermöglichen, daß die Vielzahl von Aufsatzgestellen (12) in der Richtung der Drehachse jeder der Walzen (60) und in der Richtung rechtwinklig zu der Drehachse jeder der Walzen (60) bewegbar ist, und um durch Verriegeln der Aufsatzgestelle (12) die Bewegung der Vielzahl von Aufsatzgestellen (12) bei vorherbestimmten Positionen anzuhalten.

3. Vorrichtung nach Anspruch 1 oder 2, dadurch gekennzeichnet, daß sie weiterhin umfaßt: eine Führungseinrichtung (10), um zu bewirken, daß sich ein Mittelpunkt der Aufstandsfläche des der Messung unterworfenen Fahrzeugs (14) auf einer Mittellinie zwischen den auf linken und rechten Seiten angeordneten Aufsatzgestellen (12) befindet.

4. Verfahren zum Einstellen der Stabilität eines Fahrzeugs (14) durch Verwenden der Vorrichtung zum Messen der Stabilität eines Fahrzeugs nach Anspruch 1, umfassend die Schritte:
Anordnen von Rädern des der Einstellung unterworfenen Fahrzeugs (14) entsprechend auf einer Vielzahl von Aufsatzgestellen (12);
Antreiben von zumindest einer der antreibbaren Walzen (60) der Aufsatzgestelle (12) auf linken und rechten Seiten, auf denen Hinterräder des der Einstellung unterworfenen Fahrzeugs (14) angeordnet sind;
Erfassen einer Kraft in eine Richtung der Drehachse jeder der Walzen (60) und/oder einer Kraft in eine Richtung rechtwinklig zu der Drehachse jeder der Walzen (60), die auf eine Walzeneinrichtung (56) von jedem der Aufsatzgestelle (12) auf linken und rechten Seiten wirken, auf denen Vorderräder des der Einstellung unterworfenen Fahrzeugs (14) angeordnet sind; und
Einstellen eines Rutschwinkels der Hinterräder derart, daß eine Summe der erfaßten Kräfte in der Richtung der Drehachse von jeder der Walzen (60) oder eine Differenz zwischen den erfaßten Kräften in der Richtung rechtwinklig zur Drehachse von jeder der Walzen minimal wird.

5. Verfahren zum Einstellen der Stabilität eines Fahrzeugs (14) durch Verwenden der Vorrichtung zum Messen der Stabilität eines Fahrzeugs nach Anspruch 2, umfassend die Schritte:
Einstellen einer Vielzahl von Aufsatzgestellen (12) jeweils bei Positionen, die Rädern des der Einstellung unterworfenen Fahrzeugs (14) entsprechen;
Anordnen der Räder des der Einstellung unterworfenen Fahrzeugs (14) entsprechend auf der Vielzahl der Aufsatzgestelle (12);
Antreiben von zumindest einer der antreibbaren Walzen (60) der Aufsatzgestelle (12) auf linken und rechten Seiten, auf denen Hinterräder des der Einstellung unterworfenen Fahrzeugs (14) angeordnet sind;
Erfassen einer Kraft in eine Richtung der Drehachse jeder der Walzen (60) und/oder einer Kraft in eine Richtung rechtwinklig zu der Drehachse jeder der Walzen (60), die auf eine Walzeneinrichtung (56) von jedem der Aufsatzgestelle (12) auf linken und rechten Seiten wirken, auf denen Vorderräder des der Einstellung unterworfenen Fahrzeugs (14) angeordnet sind; und
Einstellen eines Rutschwinkels der Hinterräder derart, daß eine Summe der erfaßten Kräfte in der Richtung der Drehachse von jeder der Walzen (60) oder eine Differenz zwischen den erfaßten Kräften in der Richtung rechtwinklig zur Drehachse von jeder der Walzen minimal wird.

6. Verfahren nach Anspruch 5, dadurch gekennzeichnet, daß bei dem Schritt des Anordnens der Räder des Fahrzeugs (14) die Verriegelungseinrichtung verriegelt wird, nachdem die Räder des der Einstellung unterworfenen Fahrzeugs (14) jeweils auf der Vielzahl der Aufsatzgestelle (12) in einem Zustand angeordnet werden, in dem die Verriegelungseinrichtung entriegelt ist.

7. Verfahren nach zumindest einem der Ansprüche 4 bis 6, dadurch gekennzeichnet, daß es weiterhin den Schritt umfaßt: Einstellen des Rutschwinkels der Hinterräder derart, daß jede der Kräfte in der Richtung der Drehachse von jeder der Walzen (60) minimal wird, die auf die Aufsatzgestelle (12) auf linken und rechten Seiten wirken, auf denen die Hinterräder angeordnet sind, indem zumindest eine der antreibbaren Walzen (60) der Aufsatzgestelle (12) auf linken und rechten Seiten angetrieben wird, auf denen die Hinterräder des der Einstellung unterworfenen Fahrzeugs (14) angeordnet sind.

8. Verfahren nach zumindest einem der Ansprüche 4 bis 7, dadurch gekennzeichnet, daß es weiterhin die Schritte umfaßt: Einstellen des Rutschwinkels der Vorderräder derart, daß jede der Kräfte in der Richtung der Drehachse von jeder der Walzen (60) minimal wird, die auf die Aufsatzgestelle (12) auf linken und rechten Seiten wirken, auf denen die Vorderräder angeordnet sind, indem zumindest eine der antreibbaren Walzen (60) der Aufsatzgestelle (12) auf linken und rechten Seiten angetrieben wird, auf denen die Vorderräder des der Einstellung unterworfenen Fahrzeugs (14) angeordnet sind.

9. Verfahren zum Einstellen der Stabilität eines Fahrzeugs (14) durch Verwenden der Vorrichtung zum Messen der Stabilität eines Fahrzeugs nach Anspruch 1, umfassend die Schritte:
Anordnen von Rädern des der Einstellung unterworfenen Fahrzeugs (14) entsprechend auf einer Vielzahl von Aufsatzgestellen (12);
Antreiben von zumindest einer der antreibbaren Walzen (60) von einem einzelnen Aufsatzgestell (12) der Vielzahl Aufsatzgestelle, auf denen die jeweiligen Räder des der Einstellung unterworfenen Fahrzeugs (14) angeordnet sind;
Erfassen einer Kraft in eine Richtung der Drehachse jeder der Walzen (60) und/oder einer Kraft in eine Richtung rechtwinklig zur Drehachse jeder der Walzen, die auf eine Walzeneinrichtung (56) wirken, von deren Walzen zumindest eine angetrieben wurde; und
Einstellen eines Rutschwinkels des Rads auf zumindest einer der angetriebenen Walzen (60) derart, daß die in der Richtung der Drehachse von jeder der Walzen und/oder die in der Richtung rechtwinklig zur Drehachse von jeder der Walzen erfaßte Kraft minimal wird.

10. Verfahren zum Einstellen der Stabilität eines Fahrzeugs (14) durch Verwenden der Vorrichtung zum Messen der Stabilität eines Fahrzeugs nach Anspruch 2, umfassend die Schritte:
Einstellen einer Vielzahl von Aufsatzgestellen (12) jeweils bei Positionen, die Rädern des der Einstellung unterworfenen Fahrzeugs (14) entsprechen;
Anordnen der Räder des der Einstellung unterworfenen Fahrzeugs (14) entsprechend auf der Vielzahl der Aufsatzgestelle (12);
Antreiben von zumindest einer der antreibbaren Walzen (60) von einem einzelnen Aufsatzgestell (12) der Vielzahl Aufsatzgestelle, auf denen die jeweiligen Räder des der Einstellung unterworfenen Fahrzeugs (14) angeordnet sind;
Erfassen einer Kraft in eine Richtung der Drehachse jeder der Walzen (60) und/oder einer Kraft in eine Richtung rechtwinklig zur Drehachse jeder der Walzen (60), die auf eine Walzeneinrichtung (56) wirken, von deren Walzen zumindest eine angetrieben wurde; und
Einstellen eines Rutschwinkels des Rads auf zumindest einer der angetriebenen Walzen (60) derart, daß die in der Richtung der Drehachse von jeder der Walzen und/oder die in der Richtung rechtwinklig zur Drehachse von jeder der Walzen erfaßte Kraft minimal wird.

## Revendications

1. Appareil de mesure de la stabilité d'un véhicule (14), comprenant :
plusieurs râteliers (12) de positionnement comprenant chacun un dispositif (56) ayant plusieurs rouleaux (60) dont les axes de rotation sont disposés parallèlement les uns aux autres et sont orientés horizontalement, l'un au moins des rouleaux (60) étant entraîné en rotation, et un capteur (54) destiné à détecter au moins une force dans la direction de l'axe de rotation des rouleaux (60) et une force en direction perpendiculaire à l'axe de rotation de chacun des rouleaux (60), agissant sur le dispositif à rouleaux (56), les râteliers (12) occupant des positions correspondant à des roues respectives du véhicule (14) soumis à la mesure si bien que les axes de rotation de tous les rouleaux (60) sont parallèles les uns aux autres, et chacun des râteliers (12) de positionnement est mobile indépendamment dans la direction des axes de rotation de tous les rouleaux (60) et en direction perpendiculaire à l'axe de rotation de tous les rouleaux (60),
un dispositif (64) d'entraînement de l'un au moins des rouleaux (60), et
une unité (16) d'affichage d'une valeur détectée par le capteur (54).

2. Appareil selon la revendication 1, caractérisé en ce qu'il comporte en outre un dispositif de blocage destiné à permettre un déplacement des râteliers (12) dans la direction des axes de rotation des rouleaux (60) en direction perpendiculaire à l'axe des rouleaux, et à empêcher le déplacement des râteliers (12) à des positions prédéterminées par blocage des râteliers de positionnement.

3. Appareil selon la revendication 1 ou 2, caractérisé en ce qu'il comporte en outre un dispositif de guidage (10) destiné à provoquer le positionnement d'un point central de la bande de roulement d'une roue du véhicule (14) soumis à la mesure sur un axe central disposé entre les râteliers (12) placés à gauche et à droite.

4. Procédé d'ajustement de la stabilité d'un véhicule (14) à l'aide de l'appareil de mesure de stabilité d'un véhicule selon la revendication 1, comprenant les étapes suivantes :
la disposition des roues du véhicule (14) soumis à l'ajustement sur plusieurs râteliers (12) de positionnement respectivement,
l'entraînement de l'un au moins des rouleaux menants (60) des râteliers (12) aux côtés gauche et droit desquels sont placées les roues arrière du véhicule soumis à l'ajustement,
la détection d'une force au moins parmi une force ayant la direction des axes de rotation des rouleaux (60) et une force ayant une direction perpendiculaire aux axes de rotation de tous les rouleaux, agissant sur un dispositif (56) à rouleaux de chacun des râteliers (12) de positionnement aux côtés gauche et droit desquels sont placées les roues avant du véhicule (14) soumis à l'ajustement, et
l'ajustement de l'angle d'attitude des roues arrière afin que la somme des forces détectées dans la direction des axes de rotation de tous les rouleaux (60) ou une différence entre les forces détectées en direction perpendiculaire aux axes de rotation de tous les rouleaux devienne minimale.

5. Procédé d'ajustement de la stabilité d'un véhicule (14) à l'aide d'un appareil de mesure de la stabilité d'un véhicule selon la revendication 2, comprenant les étapes suivantes :
le montage de plusieurs râteliers de positionnement (12) respectivement à des positions correspondant aux roues du véhicule (14) soumis à l'ajustement,
la disposition des roues du véhicule (14) soumis à l'ajustement sur les râteliers de positionnement (12) respectivement,
l'entraînement d'au moins l'un des rouleaux menants (60) des râteliers (12) aux côtés gauche et droit desquels sont placées les roues arrière du véhicule (14) soumis à l'ajustement,
la détection d'au moins une force parmi une force ayant la direction des axes de rotation de tous les rouleaux (60) et une force ayant une direction perpendiculaire aux axes de rotation de tous les rouleaux, agissant sur un dispositif à rouleaux (56) de chacun des râteliers (12) aux côtés et droits desquels sont placées les roues avant du véhicule (14) soumis à l'ajustement, et
l'ajustement d'un angle d'attitude des roues arrière afin qu'une somme des forces détectées dans la direction des axes de rotation de tous les rouleaux (60) ou une différence entre les forces détectées en direction perpendiculaire aux axes de rotation de tous les rouleaux soit minimale.

6. Procédé selon la revendication 5, caractérisé en ce que, au cours de l'étape de disposition des roues du véhicule (14), le dispositif de blocage est bloqué après que les roues du véhicule soumis à l'ajustement ont été placées respectivement sur les râteliers de positionnement (12) dans un état dans lequel le dispositif de blocage est débloqué.

7. Procédé selon l'une des revendications 4 à 6, caractérisé en ce qu'il comprend en outre une étape d'ajustement de l'angle d'attitude des roues arrière afin que chacune des forces dans la direction des axes de rotation de tous les rouleaux (60) agissant sur les râteliers de positionnement (12) aux côtés gauche et droits desquels sont placées les roues arrière devienne minimale, par entraînement d'au moins un rouleau menant des râteliers de positionnement aux côtés gauche et droit desquels sont placées les roues arrière du véhicule (14) soumis à l'ajustement.

8. Procédé selon l'une quelconque des revendications 4 à 7, caractérisé en ce qu'il comprend en outre l'étape d'ajustement de l'angle d'attitude des roues avant de manière que chacune des forces dans la direction des axes de rotation de tous les rouleaux (60) agissant sur les râteliers de positionnement (12) aux côtés gauche et droit desquels sont placées les roues avant devienne minimale, par entraînement d'au moins un rouleau menant des râteliers de positionnement (12) aux côtés gauche et droit desquels sont placées les roues avant du véhicule soumis à l'ajustement.

9. Procédé d'ajustement de la stabilité d'un véhicule (14) par utilisation de l'appareil de mesure de stabilité d'un véhicule selon la revendication 1, comprenant les étapes suivantes :
la disposition des roues du véhicule (14) soumis à l'ajustement sur plusieurs râteliers de positionnement (12) respectivement,
l'entraînement d'au moins un rouleau menant (60) d'un râtelier de positionnement (12) parmi plusieurs râteliers de positionnement sur lesquels sont placées les roues respectives du véhicule (14) soumis à l'ajustement,
la détection d'une force au moins parmi une force ayant la direction des axes de rotation de tous les rouleaux (60) et une force ayant une direction perpendiculaire aux axes de rotation de tous les rouleaux, agissant sur un dispositif à rouleaux (56) dont un rouleau au moins a été entraîné, et
l'ajustement d'un angle d'attitude de la roue sur l'un au moins des rouleaux (60) qui est entraîné afin qu'au moins une force choisie parmi la force détectée dans la direction des axes de rotation de tous les rouleaux et la force détectée en direction perpendiculaire aux axes de rotation de tous les rouleaux devienne minimale.

10. Procédé d'ajustement de la stabilité d'un véhicule (14) à l'aide de l'appareil de mesure de stabilité d'un véhicule selon la revendication 2, comprenant les étapes suivantes :
la disposition de plusieurs râteliers de positionnement (12) respectivement à des positions correspondant aux roues du véhicule (14) soumis à l'ajustement,
la disposition des roues du véhicule (14) soumis à l'ajustement sur les râteliers de positionnement (12),
l'entraînement de l'un au moins des rouleaux menants (60) d'un râtelier de positionnement (12) parmi les divers râteliers de positionnement sur lesquels sont placées les roues respectives du véhicule (14) soumis à l'ajustement,
la détection d'au moins une force parmi une force ayant la direction des axes de rotation de tous les rouleaux (60) et une force de direction perpendiculaire aux axes de rotation de tous les rouleaux, agissant sur un dispositif à rouleaux (56) dont l'un au moins des rouleaux a été entraîné, et
l'ajustement d'un angle d'attitude de la roue montée sur l'un au moins des rouleaux (60) entraînés afin qu'une force au moins parmi la force détectée dans la direction des axes de rotation de tous les rouleaux et la force détectée en direction perpendiculaire aux axes de rotation de tous les rouleaux devienne minimale.
